(19) Europäisches Patentamt
European Patent Office
Office européen des brevets

(11) Veröffentlichungsnummer: **0 003 035**
**B1**

(12) **EUROPÄISCHE PATENTSCHRIFT**

(45) Veröffentlichungstag der Patentschrift: **24.03.82**

(21) Anmeldenummer: **78101779.3**

(22) Anmeldetag: **20.12.78**

(51) Int. Cl.³: **C 08 F 14/06,**
C 23 F 15/00,
C 08 F 259/04

(54) **Verfahren zur Herstellung von Vinylchlorid-Polymerisaten sowie Polymerisationsgefäss zur Ausführung des Verfahrens.**

(30) Priorität: **24.12.77 DE 2757924**

(43) Veröffentlichungstag der Anmeldung:
**25.07.79 Patentblatt 79/15**

(45) Bekanntmachung des Hinweises auf die Patenterteilung:
**24.03.82 Patentblatt 82/12**

(84) Benannte Vertragsstaaten:
**BE CH DE FR GB IT NL SE**

(56) Entgegenhaltungen:
**DE - A - 2 044 259**
**DE - A - 2 703 280**

(73) Patentinhaber: **HOECHST AKTIENGESELLSCHAFT**
**Postfach 80 03 20**
**D-6230 Frankfurt/Main 80 (DE)**

(72) Erfinder: **Fischer, Edgar, Dr.**
**Assmannshäuser Weg 8**
**D-6000 Frankfurt/Main (DE)**
Erfinder: **Brandrup, Johannes, Dr.**
**Am Allersberg 6**
**D-6200 Wiesbaden (DE)**
Erfinder: **Weinlich, Jürgen, Dr.**
**Kantstrasse 13**
**D-8261 Burgkirchen/Alz (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 003 035 B1

Courier Press, Leamington Spa, England.

# Verfahren zur Herstellung von Vinylchlorid-Polymerisaten sowie Polymerisationsgefäß zur Ausführung des Verfahrens

Die Erfindung betrifft ein Verfahren zur Herstellung von Vinylchlorid-Polymerisaten unter verminderter Bildung von Polymerbelägen an den Reaktorwandungen sowie Polymerisationsgefäß zur Ausführung des Verfahrens.

Bei der Herstellung von Vinylchlorid-Polymerisaten durch Polymerisation in wäßrigem Medium bilden sich im Verlauf der Polymerisation an der Innenwand der Polymerisationsautoklaven sowie an den Einbauten Polymerisatbeläge. Durch diese Beläge wird die Polymerisatausbeute vermindert und die Qualität des Produktes verschlechtert, da die Verkrustungen teilweise abfallen und in das Endprodukt gelangen und dort zu Stippen oder "Fischaugen" führen. Die Beläge behindern außerdem die Abfuhr der Polymerisationswärme durch die Reaktorwandungen, wodurch unwirtschaftliche, lange Reaktionszeiten in Kauf genommen werden müssen.

Die Entfernung derartiger Beläge ist daher unumgänglich, was üblicherweise auf mechanischem Wege geschieht. Hierfür werden zumeist Druckwasser-Ausspritzgeräte verwendet, die jedoch nur die leicht haftenden Wandabscheidungen entfernen. Daher muß der Reaktor jeweils nach wenigen Ansätzen unter aufwendigen Sicherheitsvorkehrungen bestiegen und zusätzlich von Hand mittels Spachtel gereinigt werden. Diese Reinigungsarbeiten sind arbeitsintensiv und kostspielig, verursachen lange Stillstandzeiten und vermindern somit die Wirtschaftlichkeit des Verfahrens beträchtlich.

Es hat daher nicht an Versuchen gefehlt, derartige Polymerisatbeläge bei der Herstellung von Vinylchloridpolymerisaten in wäßriger Dispersion zu vermindern oder gleich zu vermeiden. Eine befriedigende Lösung des Problems wurde aber noch nicht erreicht.

Von den zahlreichen bekannten Verfahren bezwecken einige, durch verfahrenstechnische Maßnahmen die Belagsbildung zu vermindern. Beispielsweise sei hier genannt: das Abstreifen der Wände des Reaktors mit einem entsprechend ausgebildeten Rührer, die Einregulierung der Wandtemperatur auf mindestens die Temperatur des Reaktionsmediums, die Kühlung der Reaktorwand auf −15°C bis 0°C, das Zuführen wäßriger Lösungen, beispielsweise von Salzen der Permangansäure, Chromsäure oder Dichromsäure während der Polymerisation an der Grenzfläche zwischen Flüssigkeit und Gasphase, die Polymerisation unter Durchleiten eines elektrischen Stromes durch das flüssige Reaktionsmedium etc.

Bei anderen bekannten Verfahren werden die Komponenten des Polymerisationsrezeptes verändert und/oder der Polymerisationsflotte weitere Stoffe zugesetzt.

Weitere bekannte Verfahren verwenden zur Belagsunterdrückung Reaktoren mit besonders ausgebildeten bzw. beschichteten Innenwänden, z.B. solche mit einer Rauhtiefe der Wand von weniger als 10 $\mu$m zusammen mit wasserlöslichen, reduzierenden anorganischen Salzen und bestimmten Rührgeschwindigkeiten; oder eine unlösliche Wandbeschichtung aus einem vernetzten polymeren Material, das polare Gruppen enthält und mit einem Aldehyde als Vernetzungskomponente hergestellt wurde; oder einen Wandüberzug, der überwiegend aus Polyäthylenimin besteht, das mit einem Harnstoff, Aldehyd bzw. Diisocyanat gehärtet wurde, wobei dem Polymerisationsmedium außerdem ein zweiwertiges Zinnsalz einer anorganischen Säure als Inhibitor zugesetzt werden kann; oder eine gleichmäßige Wandbeschichtung mit mindestens einer polaren organischen Stickstoff-, Schwefel- oder -Sauerstoffverbindung eines anionenaktiven oder nichtionogenen Netzmittels, eines organischen Farbstoffs, z.B. eines Thiazolfarbstoffs, oder eines anorganischen Pigmentes. Weiterhin sind auch Wandbeschichtungen mit polyaromatischen Aminen beschrieben worden.

Keines dieser bekannten Verfahren zur Herabsetzung oder Verhinderung von Belägen im Polymerisationsreaktor befriedigt völlig, da jedes Verfahren einen oder mehrere folgender Nachteile mit sich bringt:

— Ungenügende Belagsverhinderung;

— Verlängerung der Polymerisations-Laufzeit, Verminderung der Ausbeute;

— Verunreinigung des Polymeren durch trübende oder färbende Substanzen sowie durch schwer aufschließbare, oft thermisch überbeanspruchte Teilchen aus dem Wandbelag;

— Anwendung von physiologisch bedenklichen Substanzen;

— Unerwünschte Veränderung der Verarbeitungseigenschaften des Polymeren (z.B. Vergröberung des Kornes, Verringerung der therm. Belastbarkeit);

— Schlechte Wirksamkeit bei Copolymerisation und bestimmten Initiatoren;

— Notwendigkeit von aufwendigen Oberflächengestaltungen oder Oberflächenvorbehandlungen, wie Polieren;

— Unbefriedigende Übertragbarkeit und beschränkte Variationsmöglichkeiten bezüglich Rezeptur und Fahrweise. Die Verfahren werden mehr oder weniger stark von den Strömungsverhältnissen beeinflußt, besonders kritisch sind Orte mit hoher Turbulenz; dabei müssen vielfach einmal gefundene optimale Verhältnisse bei Maßstabveränderung jeweils wieder neu erarbeitet werden;

— Nicht von der Flotte umspülte Reaktorteile erfordern vielfach besondere Schutzmaßnahmen, z.B. Dom- und Stutzenbespülung.

— Abwasserprobleme, bedingt durch die Flottenzusätze.

Aufgabe der vorliegenden Erfindung war es, ein Verfahren zur Herstellung von Vinylchlorid-

Polymerisaten bereitzustellen, welches obige Nachteile nicht besitzt bzw. welches bei der kombinierten Betrachtung obiger Punkte Vorteile gegenüber den bekannten Verfahren aufweist und bei welchem insbesondere belagsverhindernde Substanzen eingesetzt werden, die nach dem hautigen Erkenntnisstand physiologisch unbedenklich sind bzw. nur in physiologisch unbedenklichen Konzentrationen in die Polymerisationsflotte und das Polymerisat gelangen, bei dem die belagsverhindernde Wirkung lange anhält und das auch bei der Copolymerisation von Vinylchlorid genügend wirksam ist.

Diese Aufgabe wird erfindungsgemäß dadurch gelöst, daß die Polymerisation in einem Reaktor durchgeführt wird, dessen Innenteile und dessen Einbauten teilweise oder ganz mit einem Überzug versehen sind, der aus bestimmten Derivaten des Benzthiazol-2-ons-hydrazons besteht.

Die vorliegende Erfindung betrifft daher ein Verfahren zur Herstellung von Vinylchlorid-Homo-, Co- oder Pfropfpolymerisaten, die mindestens 50 Gew.-% polymerisierte Vinylchlorideinheiten enthalten, durch Polymerisation des Monomeren oder Monomerengemisches in wäßriger Dispersion mit radikalbildenden Katalysatoren, gegebenenfalls Suspensionsstabilisatoren, Emulgatoren und weiteren Polymerisationshilfsstoffen, wobei die Polymerisation in einem Reaktor durchgeführt wird, dessen Innenwände und dessen übrige Teile, an denen sich Polymerablagerungen bilden können, ganz oder teilweise mit einem Überzug versehen sind, der Thiazolverbindungen als belagsunter drückende Verbindungen enthält, dadurch gekennzeichnet, daß diese belagsunterdrückenden Verbindungen solche der allgemeinen Formel

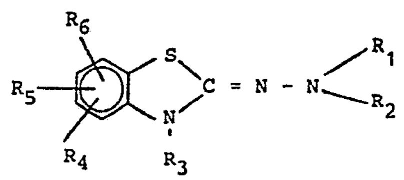

sind, in der

$R_1$ = Wasserstoff, wobei einer der Reste $R_4$ bis $R_6$ gleich Carboxyl oder Sulfonyl ($-SO_3H$) sein muß und keiner der verbleibenden Reste für Wasserstoff steht oder keiner der Reste $R_4$ bis $R_6$ für Wasserstoff steht;

Formyl, $-(CH_2)_X-COOH$ (X = 1, 2) oder

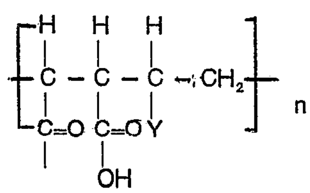

n = 5 – 1000, vorzugsweise 20 – 500 und besonders 50 – 150

Y = Phenyl

$-O-$Alkyl($C_1$–$C_{10}$, vorzugsweise $C_1$–$C_6$)

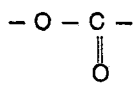 Alkyl($C_1$–$C_{10}$, vorzugsweise $C_1$–$C_6$)

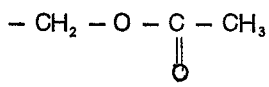

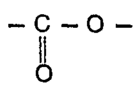 Alkyl($C_1$–$C_{10}$, vorzugsweise $C_1$–$C_6$)

$R_2$ = Wasserstoff;

$R_3$ = Wasserstoff oder einen organischen Kohlenwasserstoffrest mit 1 bis 12 C-Atomen;

$R_4$ = $R_3$ oder O-organ. Kohlenwasserstoffrest mit 1 bis 12 C-Atomen, Hydroxyl, Halogen, Amino, (Di)alkylamino mit 1 bis 12 C-Atomen, Carboxyl, Sulfonyl;

$R_5$, $R_6$ = $R_4$ oder

$R_4$ und $R_5$ einen aromatischen Ring bedeuten.

Weiterhin betrifft die Erfindung ein Polymerisationsgefäß, dessen Innenwände und übrige Teile, an denen sich Polymerisatablagerungen bilden können, ganz oder teilweise mit vorstehendem Beschichtungssystem überzogen sind.

In obiger allgemeiner Formel bedeuten vorzugsweise:

$R_1$ = Wasserstoff, wobei mindestens einer, vorzugsweise zwei der Reste $R_4$ bis $R_6$ gleich Carboxyl oder $SO_3H$ sein muß und keiner der verbleibenden Reste fü Wasserstoff steht oder keiner der Reste $R_4$

bis $R_6$ für Wasserstoff steht;

$R_3$ = Wasserstoff; einen Kohlenwasserstoffrest aliphatischen Charakters (Alkyl, Cycloalkyl, Aralkyl) mit 1 bis 12 C-Atomen, insbesondere einen geradkettigen oder verzweigten Alkylrest mit 1 bis 6 C-Atomen, beispielsweise Methyl, Äthyl, Propyl, Butyl, i-Butyl, n-Hexyl;

$R_4 = R_3$; oder Alkoxy mit 1 bis 6 C-Atomen, wie Methoxy, Äthoxy, Propoxy; Hydroxyl; Fluor, Chlor; Dialkylamino; Carboxyl oder Sulfonyl;

$R_5$, $R_6$ = $R_4$ oder

$R_4$ und $R_5$ einen aromatischen Ring mit 6 bis 10 C-Atomen, insbesondere einen Benzolring, der gegebenenfalls durch einen oder mehrere funktionelle Gruppen substituiert sein kann, wie sie unter $R_3/R_4$ genannt sind.

Die Reste $R_4$ bis $R_6$ können, wie in der allgemeinen Formel zum Ausdruck gebracht, an beliebiger Stelle des Benzolringes stehen. Beispiele für erfindungsgemäße Kombinationen von $R_4$, $R_5$ und $R_6$ sind (wobei nachfolgend Alkyl und Alkoxy solche Reste mit 1—6 C-Atomen bedeuten sollen):

Bei $R_4$ (oder $R_5$ oder $R_6$) = Wasserstoff:

4,5-Dialkyl, 4,6-Dialkyl, 5,6-Dialkyl, 6,7-Dialkyl, 5,7-Dialkyl, 4(5)-Alkyl-5(4)-Alkoxy, 4(6)-Alkyl-6(4)-Alkoxy, 5(6)-Alkyl-6(5)-Alkoxy, 6(7)-Alkyl-7(6)-Alkoxy, 4(5)-Alkyl-5(4)-Chlor, 4(6)-Alkyl-6(4)-Chlor, 5(6)-Alkyl-6(5)-Chlor, 6(7)-Alkyl-7(6)-Chlor, 4(6)-Alkyl-6(4)-Hydroxy(Amino), 4(5)-Hydroxy(Amino)-5(4)-Alkyl, 4(6)-Alkyl-6(4)(Di)alkyl-Amino, 4(6)-Hydroxy-6(4)-Amino, 4(6)-Hydroxy-6(4)-(Di)alkyl-Amino, 4(5)-Alkyl-5(4)-Carboxy(Sulfonyl), 5(6)-Alkyl-6(5)-Carboxy(Sulfonyl), 6(7)-Alkyl-7(6)-Carboxy(Sulfonyl), 4(6)-Hydroxy-6(4)-Carboxy(Sulfonyl), 6(7)-Hydroxy-7(6)-Carboxy(Sulfonyl).

Bei $R_4$ (oder $R_5$ oder $R_6$) $\neq$ Wasserstoff:

5,6,7-Trialkyl; 4,5,6-Trialkyl; 5-Alkoxy-6,7-Dialkyl; 5,6-Dialkyl-7-Carboxy; 6,7-Dialkyl-5-Sulfonyl; 4,6-Dialkyl-5-Diäthylamino; 5,7-Dialkyl-6-Hydroxy; 6,7-Dialkyl-5-Chlor; 6-Alkyl-5-Chlor-7-Carboxy.

Bevorzugt sind erfindungsgemäß Verbindungen obiger allgemeiner Formel, in der $R_3$ und einer der Reste $R_4$ bis $R_6$ Wasserstoff bedeuten und insbesondere solche, bei denen zwei dieser Reste $R_4$ bis $R_6$ für Wasserstoff stehen.

Einige typische Vertreter von Verbindungen der obigen allgemeinen Formel sind beispielsweise: Benethiazol - 2 - on(β - Formylhydrazon); (5 - O - n - Butylbenzthiazol - 2 - on - hydrazono)-essigsäure, β(Benzthiazol - 2 - on - hydrazono)propionsäure; 7 - Carboxy - Benzthiazol - 2 - on - hydrazon; Benzthiazol - 2 - on - hydrazon - 5 - Sulfosäure; - 5 - Dimethylamino - Benzthiazol - 2 - on-(β - Formyl - hydrazon); Napth - thiazol - 2 - on - (β - Formyl - hydrazon); (5 - t - Butylbenzthiazol - 2 - on - hydrazono)essigsäure; 5 - Hydroxy - benzthiazol - 2 - on - (β - Formyl - hydrazon); 5 - Methoxybenzthiazol - 2 - on - (β - Formyl - hydrazon); (6 - Chlorbenzthiazol - 2 - on - hydrazono)-essigsure; 4,5 - Dimethyl - benzthiazol - 2 - on(β - Formyl - hydrazon), 5,6 - Dimethyl - benzthiazol-2 - on - (β - Formyl - hydrazon); (5 - Äthoxy-benzthiazol - 2 - on - hydrazono)essigsäure; 5 - Methyl-7 - Carboxy - benzthiazol - 2 - on - hydrazon; 6,7 - Dimethylbenzthiazol - 2 - on - hydrazon - 5 - Sulfosäure, 5 - Chlor - 7 - Carboxybenzthiazol - 2 - on - hydrazon, 5 - Äthoxy - 6 - Methylbenzthiazol-2 - on - (β - Formyl - hydrazon);

Umsetzungsprodukt aus Benzthiazol - 2 - on - hydrazon mit

1 : 1 Copolymerisat aus Maleinsäureanhydrid + Styrol

1 : 1 Copolymerisat aus Maleinsäureanhydrid + Allylacetat,

1 : 1 Copolymerisat aus Maleinsäureanhydrid + Vinylacetat,

1 : 1 Copolymerisat aus Maleinsäureanhydrid + Vinylmethyläther.

Weiterhin seien hier noch genannt:

1 - Methylbenzthiazol - 2 - on - (β - Formyl - hydrazon), 1 - Butyl - benzthiazol - 2 - on - (β - Formylhydrazon), 1 - Äthyl - 5 - Methoxy - Benzthiazol - 2 - on - (β - Formyl - hydrazon), Naphth - thiazol-2 - on - (β - Formyl - hydrazon), 1 - Äthyl - 5 - Chlor - Benzthiazol - 2 - on - (β - Formyl - hydrazon), 1,6 - Dimethylbenz - thiazol - 2 - on - (β - Formyl - hydrazon), 1 - Propyl - 7 - Chlor - Benzthiazol - 2 - on - (β - Formyl - hydrazon), 1 - Methyl - 6 - Hydroxy - Benzthiazol - 2 - on - (β - Formylhydrazon), 1 - Methyl - 7 - Carboxy - Benzthiazol - 2 - on - (β - Formyl - hydrazon), 1 - Methyl-4 - Methyl - 6 - Hydroxy - Benzthiazol - 2 - on - (β - Formyl - hydrazon), 4 - Methyl - Benzthiazol-2 - on - (β - Formyl - hydrazon), 5 - Methyl - Benzthiazol - 2 - on - (β - Formyl - hydrazon), 6 - Methyl-Benzthiazol - 2 - on - (β - Formylhydrazon), 7 - Methyl - Benzthiazol - 2 - on - (β - Formyl - hydrazon), 5 - n - Hexylbenzthiazol - 2 - on - (β - Formyl - hydrazon), (5, 6 - Di - methylbenzthiazol - 2 - on - hydrazono)essigsäure, 6,7 - Di - methylbenzthiazol - 2 - on - (β - Formyl - hydrazon), (5 - Methoxy - Benzthiazol - 2 - on - hydrazono)essigsäure, 5 - Chlor - Benzthiazol - 2 - on - (β - Formyl - hydrazon), 7-Chlor - Benzthiazol - 2 - on - (β - Formyl - hydrazon), 7 - Hydroxy - Benzthiazol - 2 - on - (β - Formylhydrazon), 6 - Dimethylamino - Benzthiazol - 2 - on - (β - Formyl - hydrazon), 5 - Carboxy - Benzthiazol - 2 - on - (β - Formylhydrazon), (7 - Carboxy - Benzthiazol - 2 - on - hydrazono)essigsäure, (5-Sulfonylbenzthiazol - 2 - on - hydrazono)essigsäure, β(7 - Sulfonyl - Benzthiazol - 2 - on - hydrazono)-propionsäure, β(5 - Methyl - 6 - Hydroxy - Benzthiazol - 2 - on - hydrazono)propionsäure, (5 - Methyl-6 - Dimethylamino - Benzthiazol - 2 - on - hydrazono)essigsäure, (5 - Methyl - 7 - Carboxy-Benzthiazol - 2 - on - hydrazono)essigsäure, (4 - Methyl - 7 - Carboxy - Benzthiazol - 2 - on - hydrazono)essigsäure, (4 - Methyl - 7 - Sulfonyl - Benzthiazol - 2 - on - hydrazono)essigsäure, (5 - Chlor - 7-Carboxy - Benzthiazol - 2 - on - hydrazono)essigsäure, (4 - Hydroxy - 7 - Carboxyl - Benzthiazol - 2-on - hydrazono)propionsäure, $\beta$(5 - Carboxy - 6 - Hydroxy - Benzthiazol - 2 - on - hydrazono) - propionsäure.

Selbstverständlich liegt es im Rahmen der Erfindung, die oben definierten Substanzen auch in Mischung untereinander einzusetzen.

Außerdem ist es möglich die erfindungsgemäß eingesetzten Substanzen mit bekannten belagsunterdrückenden Materialien zu kombinieren, beispielsweise mit Verbindungen mit Azin- oder Thiazinringen wie Methylenblau, organischen Farbstoffen wie Nigrosinschwarz oder Anilinschwarz, anorganischen Pigmenten wie in der DE—A—2.044.259 beschrieben oder mit polymeren Iminen gemäß der DE—A—2.357.867 oder mit polyaromatischen Aminen wie in der DE—A—2.541.010 offenbart.

Weiterhin können die erfindungsgemäß eingesetzten Substanzen in Kombination mit Halogeniden, Hydroxiden, Oxiden und Carboxylaten irgendeines metallischen Elementes gemäß der DE—A—2.557.788, insbesondere Zinn-II-salzen eingesetzt werden, wobei sich zwischen der erfindungsgemäßen Substanz und dem Zusatz gegebenenfalls Komplexe in situ bilden können. Unter Umständen können derartige Metallkomplexe mit der erfindungsgemäßen Substanz auch gleich von vornherein eingesetzt werden, z.B. mit Kupfer-, Silber-, Zink-, Zinn-, Molybdän-, Eisen-, Kobalt-, Nickelionen wie in der DE—A—2.548.424 beschriebenen.

Schließlich kommen als Zusätze unter anderem auch noch Antischaummittel, Antioxidantien, Benetzungsmittel udgl. infrage.

Die oben beschriebenen Zusatzstoffe kommen vor allem dann zum Einsatz, wenn als Trägermaterial eine vernetzende Substanz oder Substanzmischung benutzt wird, da dann eine besonders wirkungsvolle Fixierung auf den Beschichtungsflächen erfolgt und bei evtl. physiologisch nicht unproblematischen Zusatzstoffen die Gefahr gering ist, daß diese in bedenklichen Konzentrationen in die Polymerisationsflotte oder in das Polymerisat gelangen.

Unter dem Begriff "Überzug" sind generall solche Beschichtungen bzw. Oberflächenbelegungen zu verstehen, die durch Inkontaktbringen einer Lösung oder Dispersion der erfindungsgemäßen Substanzen mit den jeweiligen Innenteilen des Reaktors entstehen, beispielsweise durch Besprühen, Spülen udgl. oder aber auch solche Beschichtungen, die unter Mitverwendung einer filmbildenden, vorzugsweise vernetzenden Trägersubstanz erhältlich sind.

Die Menge an aufgebrachter Substanz gemäß obiger allgemeiner Formel beträgt zweckmäßigerweise mehr als 0,001 g/m$^2$ und vorzugsweise mehr als 0,01 g/m$^2$. Die Obergrenze ist in erster Linie durch wirtschaftliche Überlegungen begrenzt und liegt in der Regel bei etwa 0,1 g/m$^2$.

Da die erfindungsgemäßen eingesetzten Verbindungen durch Luftsauerstoff oder beispielsweise peroxidische Initiatoren oxidiert werden, liegen in den erhaltenen Überzügen neben der eigentlichen Verbindung gemäß obiger Formel auch deren Oxydationsprodukte vor. Es ist zu vermuten, daß die sich dabei an den beschichteten Flächen bildenden Ladungsübergangskomplexe (Charge-Transfer-Komplexe) wesentliche Wirkunsträger sind.

Die Fixierung der Verbindungen gemäß obiger allgemeiner Formel auf den zu beschichtenden Reaktorteilen kann, wie vorstehend erwähnt, in der Weise erfolgen, daß eine zusätzliche filmbildende, vorzugsweise vernetzende Trägersubstanz verwendet wird, wobei im letzteren Falle die Wirksubstanz teilweise oder ggf. sogar ganz als Vernetzungskomponente wirken kann. Die dadurch erfolgende chemische Bindung bewirkt eine besonders starke Fixierung der Wirksubstanz in dem Überzug, so daß ein Auswaschen derselben nicht zu befürchten ist. Bei Einsatz von nichtvernetzenden Trägersubstanzen kann dem Auswaschen zu einem gewissen Umfange dadurch begegnet werden, daß zusätzlich eine kleine Menge der Wirksubstanz, beispielsweise 1 bis 100 ppm (bez. auf das Gewicht des Monomeren oder der Monomerenmischung), der Polymerisationsflotte zugesetzt wird.

Als filmbildende Trägermaterialien sind im Prinzip alle Lacksysteme geeignet, sofern dabei nach der Aushärtung ein Überzug entsteht, der gegenüber der Polymerisationsflotte und dem bzw. den Monomeren genügend beständig ist, d.h. der auch nach mehreren Polymerisationsansätzen keine merkliche Auflösung oder Anquellung zeigt.

Als Beispiel für derartige filmbildende Trägermaterialien seien genannt: übliche Lacke, Cellulosederivate, Polyvinylacetate, Polystyrol, Polyvinylchlorid. Als Lösungs- bzw-Dispergiermittel kommen die üblichen Lösungsmittel, beispielsweise niedrige Alkohole wie Methanol, Äthanol, m(i)-Propanol, n(i)-Butanol, Ätheralkohole wie Monomethylglykoläther, Ketone wie Aceton, Cyclohexanon, Ester wie Äthylacetat, Butylacetat, chlorierte Kohlenwasserstoffe wie Methylenchloride, Tetrachlorkohlenstoff, Trichloräthan, Trichloräthylen, Aromaten wie Benzol, Toluol, Xylol, Dimethylformamid, Dimethylacetamid, Acetonitril oder aber auch Wasser infrage. Es können auch entsprechende Gemische zum Einsatz kommen.

Wie erwähnt, werden erfindungsgemäß vorzugsweise als Trägermaterialien sog. Reaktivsysteme, d.h. vernetzende Materialien eingesetzt, wie Schellack, Alkydharze, und insbesondere Zwei- oder Mehrkomponentensysteme auf Isocyanat- oder Phenol-Aldehydbasis und speziell auf Epoxid- oder Anhydridbasis.

Reaktivsysteme auf Epoxidbasis sind beispielsweise solche, die sich von den mehrfach aromatischen oder aliphatischen Glycidyläthern wie Bisphenol A, Diglycidyläther oder Butandioldiglycidyläther, Copolymerisaten von Acryl- bzw. Methacrylglycidylester oder Maleinsäureglycidylester oder

rein aliphatischen Epoxyden wie Vinylcyclohexendiepoxyd ableiten. Es ist auch möglich, Kombinationen aus Epoxyden mit Isocyanat oder Phenol-Formaldehydsystemen einzusetzen.

Die epoxydgruppenhaltigen Polymeren bzw. Copolymeren besitzen zweckmäßigerweise einen Polymerisationsgrad zwischen 10 und 500, vorzugsweise zwischen 20 und 250. Geeignete Comonomere sind Vinylacetat, Vinylalkyläther und Allylacetat. Auch Styrol und (Meth)-acrylsäureester sowie Maleinsäureester sind geeignet. Pro Molekül des Polymeren bzw. Copolymeren sind zweckmäßigerweise 2 Epoxydgruppen vorhanden, vorzugsweise sollten 10—25 Mol% der Bausteine des Polymeren bzw. Copolymeren Epoxydgruppen tragen.

Beispiele für vernetzende Materialien auf Anhydridbasis sind 1 : 1-Copolymerisate von Maleinsäureanhydrid speziell mit Vinylalkyläther, Vinylacetat oder Allylacetat. Der Polymerisationsgrad dieser Produkte sollte im allgemeinen zwischen 50 und 1000 liegen.

Harzkomponenten auf Isocyanatbasis leiten sich beispielsweise von Hexamethylen- oder Toluylendiisocyanat ab. Derartige Verbindungen sind aus der Polyurethanchemie bekannt.

Als Lösungsmmitel für die Harzkomponenten auf Basis von Epoxiden kommen in Prinzip die gleichen in Betracht wie oben bei den nichtvernetzenden Trägermaterialien bereits erwähnt, insbesondere Monoäther des Glykols wie Mono-Methyl- oder Mono-Äthylglykoläther.

Für die Harzkomponenten auf Anhydridbasis sind speziell aprotische Lösungsmittel geeignet wie Aceton, Methyläthylenketon, Cyclohexanon, Dioxan, Tetrahydrofuran, Dioxolan, Dimethylformamid, Dimethylsulfoxid, Glykoldimethyläther, Diglykoldimethyläther oder Gemische dieser Lösungsmittel.

Die Aushärtung dieser Reaktivsysteme kann durch Zusatz von sogenannten Härten erfolgen, bei einigen Systemen ist es jedoch möglich, daß die erfindungsgemäße Wirksubstanz diese Funktion teilweise oder ganz übernimmt. Weiterhin kann in einigen Fällen die Härtung auch nur thermisch erfolgen.

Wegen der besonders günstigen Verarbeitungsbedingungen bei hohen Reaktivitäten sind als Härter speziel die basischen Systeme vom Amintyp geeignet, z.B. Äthylendiamine, Diäthylentriamine, Triäthylentetramine oder Xylylendiamine. Ganz besonders günstig verhalten sich Umsetzungsprodukte dieser Amine mit Phenol und Formaldehyd. Weiterhin sind auch entsprechende Amin-Epoxid-Harz-Addukte oder Addukte aus mehrwertigen Alkoholen und Polyisocyanaten einsetzbar.

Wie bereits erwähnt, kann im Prinzip auch die erfindungsgemäß eingesetzte Wirksubstanz wegen der darin enthaltenden Amingruppierungen als Härtungskomponente fungieren.

Im Falle von Epoxidsystemen ist dies im allgemeinen jedoch wegen der großen Reaktivität derselben nur teilweise möglich, d.h. es ist die zusätzliche Anwesenheit eines Härters erforderlich, da ansonsten die Wirksubstanz durch weitgehende Blockierung ihrer wesentlichen Wirkgruppen in ihrer belagsverhindernden Funktion beeinträchtigt oder diese u.U. sogar praktisch ganz aufgehoben wird. Diese Gefahr ist naturgemäß umso größer, je geringer die Menge an eingesetzter Wirksubstanz im Reaktionssystem ist und je weniger Wasserstoffatome an den infrage kommenden Stickstoffatomen in obiger allgemeiner Formel vorhanden sind. Die optimale Härtermenge, die u.a. von der Reaktivität des Härters im Vergleich zu der der Wirksubstanz abhängt, läßt sich leicht durch einige Handversuche ermitteln; im allgemeinen sollten pro Epoxydgruppe 0,8—1,2, vorzugsweise 0,9—1,0 Aminwasserstoff vorhanden sein, wobei in der Regel davon 1 bis 100%, vorzugsweise 1 bis 10% von der Wirksubstanz geliefert werden können. Generell sollte die Reaktivität des Härters erheblich über der der Wirksubstanz liegen, damit die Wirksubstanz zwar in den Träger eingebaut, aber nicht blockiert wird.

Demgegenüber kann bei Anhydridsystemen gegebenenfalls die Wirksubstanz allein als Härter dienen, da diese Anhydridsysteme weniger reaktiv sind und es hier nicht zu einer totalen Blockierung aller aktiven Gruppen kommen kann. Insbesondere bei kleinen Mengen an Wirksubstanz empfiehlt sich aber auch hier die zusätzliche Verwendung eines Härters, da ansonsten u.U. eine nur unvollständige Aushärtung erfolgt, und außerdem die belagsunterdrückende Wirkung ggf. nicht befriedigend ist.

Das Mengenverhältnis von Wirk- zu Trägermaterial kann in weiten Grenzen schwanken und beträgt im allgemeinen 1 bis 50 Gew.-%, vorzugsweise 10 bis 25 Gew.-%.

Das Aufbringen der Beschichtung erfolgt in der üblichen Weise, beispielsweise durch Aufsprühen oder Aufstreichen der entsprechenden Lösung oder Dispersion, deren Viskosität so eingestellt ist, daß ein gleichmäßiger Auftrag gewährleistet ist. Im allgemeinen ist dies bei Feststoffgehalten von etwa 5 bis 40 Gew.-%, vorzugsweise 10 bis 25 Gew.-% der Fall. Die zu beschichtenden Flächen sollten, um einen dauerhaften Überzug zu erhalten, fettfrei, sauber und insbesondere von Polymerablagerungen frei sowie trocken sein.

Der Auftrag selbst kann nach einem Zweistufen- oder Einstufenverfahren erfolgen.

Beim Zweistufenverfahren wird zweckmäßig zuerst der Träger, z.B. das Anhydrid, in Lösung aufgebracht. In der zweiten Stufe erfolgt dann eine Behandlung mit einer Lösung der Wirksubstanz, gegebenenfalls unter Zusatz von Härter. Für die Wirksubstanz und den eventuellen Härter eignen sich im Prinzip die gleichen Lösungsmittel wie oben für die Reaktivsysteme und die nichthärtenden Trägermaterialien beschrieben, mit Ausnahme der Carbonylverbindungen, da durch sie beim Stehen die Funktionsfähigkeit der Wirksubstanz herabgesetzt wird. Dagegen sind niedere Alkohole oder Ätheralkohole recht gut geeignet, z.B. Methanol, Äthanol, Propanole, Butanole, Monomethylglykoläther, Monoäthylglykoläther, Phenoxyäthanol.

Die praktisch farblosen, frisch bereiteten Lösungen der Wirksubstanzen neigen bei längerem

Stehen dazu, sich stark zu verfärben; dieser Vorgang beeinträchtigt jedoch in keiner Weise ihre Wirksamkeit.

Weniger aufwendig als dieses Zweistufenverfahren ist das erfindungsgemäß bevorzugte Einstufenverfahren, das besondere Vorteile bei Epoxydträgern bietet, da hier die bei den Anhydriden benötigten aprotischen Lösungsmittel nicht erforderlich sind und physiologisch weniger bedenkliche Lösungsmittel eingesetzt werden können, wie beispielsweise die vorstehend beschriebenen Alkohole oder Ätheralkohole. Lösungen auf dieser Basis sind besonders leicht durch Streichen oder Sprühen aufzubringen. Sie zeichen sich durch hervorragenden Verlauf und große Ergiebigkeit aus. Trotz gut ausreichender Topfzeit erfolgt die Filmbildung und Aushärtung sehr rasch.

Nach erfolgtem Auftrag wird der Überzug getrocknet und anschließend gehärtet. Je nach Zustand der zu beschichtenden Oberflächen kann es zweckmäßig sein, nach der Trocknung oder auch nach der Härtung weitere Schichten aufzubringen, um so sicherzustellen, daß alle Flächen vollständig bedeckt werden.

Die Trocknung bzw. Härtung erfolgt in der Regel zwischen Raumtemperatur und 150°C, je nach der Art des Trägermaterials und der Trocknungs- bzw. Härtungsdauer, wobei naturgemäß höhere Temperaturen die Trocknung bzw. Härtung beschleunigen. Bei Epoxydsystemen liegen die Temperaturen vorzugsweise zwischen 40 und 100°C und bei den Anhydridsystemen zwischen 60 und 150°C, insbesondere 70 bis 110°C. Die Wärmezufuhr kann dabei beispielsweise durch Einblasen entsprechend erwärmter Luft oder anderer Gase, durch Einsatz entsprechender Heizvorrichtungen, die innen im Reaktor aufgestellt werden oder durch Aufheizen der Reaktorwand über darin vorhandene Kühl- bzw. Heizsysteme erfolgen.

Die aufgetragene Menge an Überzugsmischung (Wirksubstanz und Trägermaterial bzw. Reaktivsystem) ist an für sich nicht kritisch. Aus wirtschaftlichen Gründen und aus Gründen des ungehinderten Wärmeüberganges ist jedoch ein möglichst dünner Überzug aufzubringen, wobei andererseits aber eine vollständige Bedeckung sichergestellt sein muß. Naturgemäß beeinflußt der Zustand der Beschichtungsflächen, insbesondere der Reaktorwandungen die erforderliche Menge an Beschichtungsmittel pro Quadratmeter, die bei einer rauhen Oberfläche unter Umständen ein Mehrfaches einer absolut glatten Oberfläche betragen kann. Im allgemeinen werden je nach Beschaffenheit der zu beschichtenden Oberflächen Schichtdicken von 1 bis 100 $\mu$, vorzugsweise 10 bis 50 $\mu$ ausreichen.

Vorzugsweise werden die erfindungsgemäßen eingesetzten Verbindungen jedoch, da sie ein genügend starkes Aufziehvermögen auf die entsprechenden Reaktorteile besitzen, ohne zusätzlichen Träger eingesetzt, d.h. die zu beschichtenden Flächen werden einfach mit einer Lösung oder Dispersion dieser Verbindungen behandelt. Gegebenenfalls kann diese Behandlung nach entsprechender Zwischentrocknung und eventueller Erwärmung mehrfach wiederholt werden. In der Regel reicht jedoch eine einmalige Behandlung aus. Diese Behandlung erfolgt nach den üblichen Verfahren im allgemeinen bei Normaltemperatur, z.B. durch Spülen, Ausspülen, Einstreichen udgl. und zwar in der Regel vor jedem Polymerisationsansatz. Es hat sich dabei als zweckmäßig erwiesen, die behandelten Flächen vor der Polymerisation mit etwa der gleichen Menge Wasser oder Polymerisationsflotte nachzuspülen und die abgelaufenen Lösungen zu entfernen.

Als Lösungsmittel für die erfindungsgemäß eingesetzten Verbindungen zur Herstellung der entsprechenden Behandlungslösungen kommen neben Wasser vorzugsweise solche Lösungsmittel infrage, die in Wasser zumindestens teilweise löslich (bzw. mit diesen mischbar) sind, beispielsweise niedrige Alkohole wie Methanol, Äthanol, n(i)-Propanol, n(i)-Butanol; Ätheralkohole wie Monomethylglykoläther, Diglykol; Ketone wie Aceton; Ester wie Äthylacetat, Butylacetat; Dimethylformamid, Dimethylacetamid, Acetonitril sowie entsprechende Gemische untereinander sowie mit Wasser.

Vorzugsweise werden Gemische von Wasser und niederen Alkoholen mit 1 bis 3 C-Atomen eingesetzt und speziell Wasser/Methanol-Mischungen, wobei der Wassergehalt dieser Mischungen größer als 50 Gew.-%, bezogen auf die Gesamtmischung, sein kann, je nach der Löslichkeit (die natürlich von der Art der Substituenten abhängt) und der gewünschten Konzentraion. Substanzen, die saure oder basische Gruppen tragen, können auch durch Salzbildung bei entsprechendem pH-Wert in wäßrige oder wäßrig/alkoholische Lösung überführt werden. Besonders geeignet sind solche Verbindungen, die bei einem pH-Wert von größer als 7, vorzugsweise zwischen 8 und 10,5 löslich wird. Im sauren Bereich ist die Wirksamkeit der Substanzen zumeist erheblich vermindert.

Der Gehalt der Gebrauchslösungen an Wirksubstanz kann in weiten Grenzen etwa zwischen 0,25 mMol und 100 mMol pro Liter schwanken. Bei oligomeren oder polymeren Resten $R_1$ bezieht sich diese Angabe auf jeweils eine heterocyclische Gruppe gemäß obiger allgemeiner Formel. Allerdings sind die hochverdünnten Lösungen sehr empfindlich gegen Oxydation durch Luftsauerstoff und erfordern ein weitgehend anärobes Arbeiten. Bevorzugt werden Lösungen mit 5—50 mMol Substanz/1; diese können unter normalen Bedingungen, also noch an Luft gehandhabt und angewendet werden.

Die für dieses Verfahren verwendeten Behandlungslösungen besitzen speziell im alkalischen Bereich ein ausgeprägtes Reduktionsvermögen; sie sind unter diesen Bedingungen mehr oder weniger unter gleichzeitiger Verfärbung autoxydabel. Während partiell oxydierte Lösungen keine Beeinträchtigung ihrer Wirkung zeigen, vielmehr die darin wahrscheinlich enthaltenen Charge-Transfer-Komplexe eine Wirkungssteigerung auslösen können, sind total oxydierte Lösungen praktisch wirkungslos. Daher ist es günstig, die Lösungen entweder frisch zuzubereiten, oder die Herstellung und Lagerung vorteilhaft

unter Stickstoff-Schutz vorzunehmen. Auch durch Zugabe reduzierenden Substanzen kann der Einfluß von Luftsauerstoff zurückgedrängt, die Stabilität der Lösung erhöht und ihre Wirkung zum Teil gesteigert werden. Beispiele für derartige reduzierende Substanzen sind: Hydrazin oder dessen Derivate, wie Phenylhydrazin; Zinkstaub; komplexe Metallhydride, beispielsweise Natriumboranat; reduzierende Kohlehydrate wie Glucose; Reduktone wie Ascorbinsäure; Zinn(II)-verbindungen wie Zinnchlorid.

Um die Netzeigenschaften der Gebrauchslösungen zu verbessern, können ihnen vorteilhaft die gleichen Dispergatoren oder Netzmittel zugesetzt werden, die auch der Flotte für die Suspensionspolymerisation zugesetzt werden; Beispiele hierfür sind in der Hauptpatentanmeldung beschrieben.

Jedes Polymerisationsgefäß für die Polymerisation von äthylenisch ungesättigten Verbindungen kann erfindungsgemäß mit dem Überzug versehen werden, sofern Trägersubstanzen (Lacke) zur Fixierung mitverwendet werden. Somit können die zu beschichtenden Flächen aus den verschiedensten Materialien bestehen, z.B. aus Glas, Emaille bzw. Schmelzglasur oder Metall, vorzugsweise Stahl. Die größten Probleme bezüglich Polymerabscheidungen treten im allgemeinen in Reaktoren mit Metall (Stahl)-Innenflächen auf, so daß diese bevorzugt für den Überzug infrage kommen. Dies gilt insbesondere, falls keine Trägersubstanzen (Lacke) verwendet werden.

Neben den Innenwänden des Polymerisationsreaktors können sich auch Polymerablagerungen an den sogenannten Einbauten, wie Rührvorrichtungen, Stromstörern (Prallblechen), Einfüllstutzen, Ventilen, Pumpen, Rohrleitungen, Meßinstrumenten und Innenkühlern (Wärmetauschern) bilden, die daher gleichfalls ganz oder teilweise zu beschichten bzw. zu behandeln sind. Gleiches gilt auch für Außenkühler, sofern diese mehr oder weniger direkt auf das Polymerisationsgefäß aufgesetzt sind.

Bei dem erfindungsgemäßen Verfahren zur Herstellung von Vinylchlorid-Polymerisaten wird die Polymerisation selbst nach üblichen Methoden durchgeführt, wobei Vinylchlorid-Homopolymerisate, Propfcopolymerisate oder -Copolymerisate hergestellt werden können, nach der kontinuierlichen oder der Chargen-Verfahrensweise, mit oder ohne Verwendung eines Saat-Vorpolymerisates etc. Es kann dabei in wäßriger Dispersion, d.h. in Emulsion oder Suspension in Gegenwart der üblichen Initiatoren, Emulgatoren bzw. Suspensionsstabilisatoren und gegebenenfalls weiteren Polymerisationshilfsstoffen polymerisiert werden.

Als Initiatoren, die zweckmäßigerweise in Mengen von 0,01 bis 3 Gew.-%, vorzugsweise 0,1—0,3 Gew.-%, bezogen auf Monomere, ein esetzt werden, seien beispielsweise genannt:

Diaryl-, Diacylperoxide, wie Diacetyl-, Acetylbenzoyl-, Dilauroyl-, Dibenzoyl-, Bis-2,4-dichlorbenzoyl-, Bis-2-Methylbenzoyl-peroxid; Dialkylperoxide wie Di-tert-butylperoxid, Perester wie tert.-Butylpercarbonat; tert.-Butylperacetat, tert.-Butylperoctoat, tert.-Butylperpivalat; Dialkylperoxiddicarbonate wie Diisopropyl-, Diäthylhexyl-, Dicyclohexyl-, Diäthylcyclohexylperoxiddicarbonate; gemischte Anhydride von organischen Sulfopersäuren und organischen Säuren, wie Acetylcyclohexylsulfonylperoxid; als Polymerisationskatalysatoren bekannte Azoverbindungen, wie Azoisobuttersäurenitril, außerdem Persulfate, wie Kalium-, Natrium- oder Ammoniumpersulfat, Wasserstoffperoxid, tert.-Butylhydroperoxid oder andere wasserlösliche Peroxide, sowie auch entsprechende Gemische. Im Falle von peroxidischen Katalysatoren können diese auch in Gegenwart von 0,01 bis 1 Gew.-%, bezogen auf Monomere, einer oder mehrerer reduzierender Substanzen, die zum Aufbau eines Redoxy-Katalysatorsystems geeignet sind, wie z.B. Sulfite, Bisulfite, Dithionite, Thiosulfate, Aldehyd-Sulfoxylate, z.B. Formaldehydsulfoxylat, eingesetzt werden. Gegebenenfalls kann die Polymerisation in Gegenwart von löslichen Metallsalzen, beispielsweise des Kupfers, Silbers, Eisens oder Chroms, durchgeführt werden, wobei die Menge zweckmäßigerweise 0,05 bis 10 ppm (auf Metallbasis, bezogen auf Monomeres) beträgt.

Ferner kann die Polymerisation, falls sie nach dem Suspensionsverfahren durchgeführt wird, in Gegenwart von 0,01 bis 1 Gew.-%, vorzugsweise 0,05 bis 0,3 Gew.-%, bezogen auf Monomere, von ein oder mehreren Schutzkolloiden, wie beispielsweise Polyvinylalkohol, der gegebenenfalls noch bis zu 40 Mol-% Acetylgruppen enthält, Cellulosederivate, wie wasserlösliche Methylcellulose, Carboxymethylcellulose, Hydroxyäthylcellulose, Methylhydroxypropylcellulose, sowie Gelatine, Leim, Dextram, ferner Mischpolymerisate von Maleinsäure bzw. deren Halbestern und Styrolen stattfinden.

Außerdem kann die Polymerisation in Gegenwart von 0,01 bis 5 Gew.-%, bezogen auf Monomere, von einem oder mehreren Emulgatoren durchgeführt werden, wobei die Emulgatoren auch in Mischung mit den obengenannten Schutzkolloiden eingesetzt werden können. Als Emulgatoren können anionische, amphotere, kationische sowie nichtionogene verwendet werden. Als anionische Emulgatoren sind beispielsweise geeignet: Alkali-, Erdalkali-, Ammoniumsalze von Fettsäuren, wie Laurin-, Palmitin- oder Stearinsäure; von sauren Fettalkoholschwefelsäureestern; von Paraffinsulfonsäuren; von Alkylarylsulfonsäuren, wie Dodecylbenzol- oder Dibutylnaphthalinsulfonsäure, von Sulfobernsteinsäuredialkylestern, sowie die Alkali- und Ammoniumsalze von epoxygruppenhaltigen Fettsäuren, wie Epoxystearinsäure; von Umsetzungsprodukten von Persäuren, z.B. Peressigsäure mit ungesättigten Fettsäuren, wie Öl- oder Linolsäure oder ungesättigten Oxyfettsäuren, wie Rhizinolsäure. Als amphotere bzw. kationenaktive Emulgatoren sind beispielsweise geeignet: Alkylbetaine, wie Dodecylbetain, sowie Alkylpyridiniumsalze, wie Laurylpyridiniumhydrochlorid; ferner Alkylammoniumsalze, wie Oxäthyldodecylammoniumchlorid. Als nichtionogene Emulgatoren kommen beispielsweise infrage: Teilfettsäureester mehrwertiger Alkohole, wie Glycerinmonostearat, Sorbitmonolaurat, -oleat oder -palmitat; Polyoxyäthylenäther von Fettalkoholen oder aromatischen Hydroxyverbindungen; Polyoxy-

äthylenester von Fettsäuren sowie Polypropylenoxid-Polyäthylenoxid-Kondensationsprodukte.

Neben Katalysatoren, gegebenenfalls Schutzkolloiden und/oder Emulgatoren kann die Polymerisation in Gegenwart von Puffersubstanzen, wie beispielsweise Alkaliacetaten, Borax, Alkaliphosphaten, Alkalicarbonaten, Ammoniak oder Ammoniumsalzen von Carbonsäuren sowie von Molekülgrößen-Reglern, wie beispielsweise aliphatischen Aldehyden mit 2 bis 4 Kohlenstoffatomen, Chlor- oder Bromkohlenwasserstoffen, wie z.B. Di- und Trichloräthylen, Chloroform, Bromoform, Methylenchlorid, sowie Mercaptanen durchgeführt werden.

Die Polymerisationstemperatur beträgt in der Regel 30 bis 100°C, der Polymerisationsdruck 4 bis 40 atü und der pH-Wert 3,5 bis 8.

Zu Copolymerisation mit Vinylchlorid sind beispielsweise eines oder mehrere folgender Monomerer geeignet: Olefine, wie Äthylen oder Propylen; Vinylester von geradkettigen oder verzweigten Carbonsäuren mit 2 bis 20, vorzugsweise 2 bis 4 Kohlenstoffatomen wie Vinylacetat, -propionat, -butyrat, -2-äthylhexoat, Vinylisotridecansäureester; Vinylhalogenide, wie Vinylfluorid, Vinylidenfluorid, Vinylidenchlorid; Vinyläther; Vinylpyridin; ungesättigte Säuren, wie Malein-, Fumar-, Acryl-, Methacrylsäure und deren Mono- oder Diester mit Mono- oder Dialkoholen mit 1 bis 10 Kohlenstoffatomen; Maleinsäureanhydrid, Maleinsäureimid, sowie deren N-Substitutionsprodukte mit aromatischen, cycloaliphatischen, sowie gegebenenfalls verzweigten, aliphatischen Substituenten; Acrylnitril; Styrol.

Zur Propfcopolymerisation können beispielsweise elastomere Polymerisate verwendet werden, die durch Polymerisation von einem oder mehreren folgender Monomerer erhalten wurden: Diene, wie Butadien, Cyclopentadien; Olefine, wie Äthylen, Propylen; Styrol; ungesättigte Säuren, wie Acryl- oder Methacrylsäure sowie deren Ester mit Mono- oder Dialkoholen mit 1 bis 10 Kohlenstoffatomen; Acrylnitril; Vinylverbindungen, wie Vinylester von geradkettigen oder verzweigten Carbonsäuren mit 2 bis 20, vorzugsweise 2 bis 4 Kohlenstoffatomen; Vinylhalogenide, wie Vinylchlorid, Vinylidenchlorid.

Nach der Polymerisation können den als wäßrige Dispersion anfallenden Polymerisaten weitere Stoffe zur Stabilisierung bzw. zur Verbesserung ihrer Weiterverarbeitungseigenschaften zugesetzt werden. Anschließend wird nach üblichen Aufbereitungstechniken das trockene Polymere gewonnen.

Die Co- bzw. Propfcopolymerisate, die erfindungsgemäß hergestellt werden können, enthalten mindestens 50 Gew.-%, vorzugsweise mindestens 80 Gew.-% polymerisierte Vinylchlorid-Einheiten.

Das erfindungsgemäße Verfahren ist vorzugsweise für die Polymerisation in wäßriger Suspension mit öl-löslichen Initiatoren unter Zusatz mindestens eines Schutzkolloides (Suspensionsstabilisators) anwendbar, insbesondere für die Herstellung von Vinylchlorid-Polymerisaten und speziell für Vinylchlorid-Copolymerisate mit mindestens 50 Gew.-%, vorzugsweise 80 bis 99 Gew.-% polymerisierten Vinylchlorid-Einheiten.

Die Herstellung der erfindungsgemäß eingesetzten Substanzen erfolgt nach bekannten Methoden, beispielsweise durch Umsatz von 2-Halogen (insbesondere Chlor oder Brom) - oder 2-Thio-Benzthiazolen, die am Benzolkern gegebenenfalls entsprechend substituiert sind, mit Hydrazin und anschliessender Einführung des Restes $R_1$. Alternativ kann die Herstellung auch durch Umsatz vorstehender Benzthiazolderivate mit den entsprechend substituierten Hydrazinderivaten erfolgen.

Die Formylverbindungen können beispielsweise nach der ersten Variante durch Behandeln des jeweiligen Benzthiazol-2-on-hydrazons mit überschüssiger, 20—100%iger Ameisensäure bei erhöhten Temperaturen, etwa bei 75—110°C hergestellt werden. Gegebenenfalls kann diese Umsetzung in Anwesenheit von die Formylierung nicht störenden Lösungsmitteln wie Äther, beispielsweise Dioxan oder Tetrahydrofuran oder Estern wie Ameisensäureester durchgeführt werden.

Die carboxyalkylierten Produkte werden beispielsweise durch Umsetzen der jeweiligen Benzthiazol-2-on-hydrazone mit Alkalisalzen der entsprechenden Halogencarbonsäuren in einem Gemisch aus Wasser und $C_1$ bis $C_3$-Alkohol bei Siedetemperatur und einem pH-Wert von größer als 7, vorzugsweise 8—12 erhalten. Falls diese Verbindungen als Mittel zur Belagsunterdrückung eingesetzt werden, ist eine Isolierung nicht unbedingt erforderlich; vielmehr können die erhaltenen Lösungen als solche weiter verarbeitet werden, d.h. verdünnt und mit weiteren Zusätzen versehen werden.

Die Einführung des oligomeren bzw. polymeren Maleinsäureanhydridcopolymerisat-Restes zu den oligomeren bzw. polymeren acetylierten Benzthiazol-2-on-hydrazonen wird zweckmäßigerweise in Lösung bei ca. 75—100°C durchgeführt, wobei sich Ester wie Äthyl- oder Propylacetat, besonders aber O-Methylglykolacetat oder Äther wie Dioxan oder Tetrahydrofuran als Lösungsmittel eignen.

Das erfindungsgemäße Verfahren ermöglicht es, viele Polymerisationsansätze über lange Zeiträume ohne störende Belagsbildung an den Wänden und den Einbauten des Reaktors zu fahren. Hierdurch wird ein konstant guter Wärmeübergang auf die Behälterwand, der durch die dünne Überzugsschicht praktisch nicht beeinträchtigt wird, und damit gleichmäßige Produktqualität gewährleistet. Zeitaufwendige, kapazitätsmindernde Wandreinigungsarbeiten entfallen, desgleichen die sonst unumgängliche häufige Öffnung des Reaktors mit den damit verbundenen schädlichen Vinylchlorid-Emissionen. Bei der kontinuierlichen Polymerisation können die Zeiträume bis zur Abstellung des Kontinuums um ein Vielfaches verlängert werden. Das erfindungsgemäße Verfahren ist wenig anfällig gegenüber Änderungen der Rezeptur und/oder der Fahrweise und liefert ein Produkt, dessen Verarbeitungseigenschaften — wie bei bekannten Verfahren häufig der Fall — nicht nachteilig verändert sind.

Da die erfindungsgemäß eingesetzten Verbindungen genügend metallophil sind, können sie vorzugsweise ohne Verwendung eines Trägers (Lackes) an den betreffenden Reaktorteilen fixiert werden.

Eine derartige Verfahrensweise ist besonders vorteilhaft, da die Zeiten für das Trocknen des Reaktors vor der Wandbehandlung und für das Härten nach der Behandlung entfallen. Auf diese Weise wird eine bedeutende Kapazitätssteigerung erreicht.

Im Falle des Einsatzes von Wasser oder Wasser/Alkohol-Gemischen mit hohem Wassergehalt bietet diese Verfahrensweise gegenüber der Mitverwendung von Lacksystemen den weiteren Vorteil der erhöhten Sicherheit, da die Gefahr von Explosionen stark reduziert ist.

Auch in der Wirksamkeit zeigt diese Verfahrensweise ohne Mitverwendung eines Trägers gewisse Vorteile. Besonders wichtig ist, daß ein eventuell entstandener Belag bei Fortführung des Verfahrens meist im Laufe der folgenden Ansätze von selbst wieder verschwindet, ohne daß es zu dem normalerweise erfolgenden raschen weiteren Aufbau des Belages kommt. Diese Selbstheilungstendenz ist speziell bei nicht polymergeträgerten Wirkstoffen zu beobachten. Unter Umständen ist nach einiger Laufzeit sogar eine gewisse Passivierung des Reaktors festzustellen, d.h. die Belagsanfälligkeit ist auch ohne Einsatz von Verhinderungsmittel zunächst deutlich vermindert, steigt aber wieder an, falls in der Folge kein Belagsverhinderungsmittel eingesetzt wird.

Beispiele 1—6

A) Allgemeine Vorschrift

Die gesamte belagsfreie, trockene Innenfläche eines 400-Liter-$V_2A$-Reaktors (einschließlich Rührer), das sind ca. 3 $m^2$, wird in wasserfeuchtem Zustand, — vorhergehende Trocknung ist nicht notwendig, da praktisch ohne Einfluß auf die Wirksamkeit — mit 2000 ml der jeweiligen Gebrauchslösung bei normaler Temperatur besprüht und anschließend mit der gleichen Menge E-Wasser nachbehandelt und darauf die am Boden des Reaktors angesammelte Flüssigkeit entfernt. Der Reaktor wird nach Vorlage von 200 Liter E-Wasser, das 90 g teilverseiftes Polyvinylacetat und 60 g Methylhydroxypropylcellulose gelöst enthält, verschlossen und nach Verdrängen der Luft 100 kg Vinylchlorid chargiert, und Aktivatorlösungen von 53 g Di-2-äthylhexylperoxydicarbonat (40%ig in Aliphaten) und 27 g tert.-Butyl-perpivalat (75%ig in Aliphaten) werden nachgedrückt. Der Reaktor wird unter Rühren auf 53°C aufgeheizt und solange bei dieser Temperatur gehalten, bis der Druck auf 4,0 atü gefallen ist. Nach Versuchsende wird das Reaktionsgemisch abgekühlt, der Polymerisationskessel entspannt und entleert. Nach dem Wasserspüllen wird der Reaktor begutachtet.

Als diese Weise wird nacheinander die angegebene Zahl von Ansätzen gefahren, wobei vor jedem Ansatz der Kessel erneut mit Belagsverhinderungsmaterial bespült wird. (Ergebnisse siehe Tabelle).

B) Herstellung der verwendeten Produkte

*Benzthiazol-2-on-hydrazon-sulfonsäure*

25 Gewichtsteile Benzthiazol-2-on-hydrazon werden in ein Gemisch aus 180 Gewichtsteilen 100%iger Schwefelsäure (Monohydrat) und 90 Gewichtsteilen 20%igem Oleum eingetragen. Dabei steigt die Temperatur auf ca. 75°C. Dann wird 15 Minuten auf 80°C erwärmt und anschließend wird dieses System auf 400 Gewichtsteile Eis gegeben. Der Niederschlag wird dann abgesaugt, mit Acetylacetat gewaschen und getrocknet. Die Ausbeute beträgt 34,5 Gewichtsteile an Sulfonsäure; der Schmelzpunkt liegt bei oberhalb von 300°C.

*Gebrauchslsg. P*

30 Gewichtsteile der erhaltenen Sulfosäure werden in ein Gemisch aus 600 Gewichtsteilen Methanol, 10 Gewichtsteilen eines teilverseiften Polyvinylalkohols und 10 000 Gewichtsteilen Wasser eingetragen und der pH-Wert mit Natronlauge auf 9,5—10 eingestellt.

*7-Carboxy-Benzthiazol-2-on-hydrazon*

a) *7-Carboxy-2-Aminobenzthiazol*

27,4 Gew.-Teile Anthranilsäure werden in
200 Gew.-Teilen Wasser bei 20—30°C suspendiert.
Dazu wird eine Lösung von
78 Gew.-Teilen KSCN in
200 Gew.-Teilen Wasser gegeben.

Zu dieser Mischung wird eine Lösung von 130 Gew.-Teilen $FeCl_3$, 55 Gew.-Teilen conc. Salzsäure und 260 Gew.-Teilen Wasser innerhalb von 30 Minuten zugefügt und zwei Stunden bei Raumtemperatur, dann zwei Stunden bei 65—70°C gerührt. Dann wird auf 0°C abgekühlt, abgesaugt und mit verdünnter Salzsäure (1:4) bei 0—5°C bis zum klaren Ablauf gewaschen. Der Filterkuchen wird in 500 Gew.-Teilen Wasser, unter Zugabe von Natronlauge bis pH-Wert 9, in Lösung gebracht, mit Tierkohle aufgekocht, heiß filtriert und mit Essigsäure gefällt, abgesaugt, mit Wasser gewaschen und getrocknet. Ausbeute an 7-Carboxy-2-Amino-benzthiazol: 19 Gew.-Teile; Fp = 215°C.

b) *7-Carboxy-Benzthiazol-2-on-hydrazon*

25 Gew.-Teile 7-Carboxy-2-Aminobenzthiazol werden mit 100 Gew.-Teilen Glykol und 13 Gew.-Teilen Hydrazinhydrat (90%ig) sowie 10 Gew.-Teilen Hydrazinchlorhydrat 2 Stunden auf 140°C erhitzt.

Nach dem Erkalten unter Eiskühlung wird abgesaugt und mit Äthylacetat nachgewaschen. Ausbeute: 18,2 Gew.-Teile 7-Carboxy-Benzthiazol-2-on-hydrazon.

*Gebrauchslösung Q*

26 Gew.-Teile 7-Carboxy-Benzthiazol-2-on-hydrazon werden in einem Gemisch aus 600 Gew.-Teilen Methanol, 10 Gew.-Teilen eines teilverseiften Polyvinylalkohols und 10 000 Gew.-Teilen Wasser eingetragen und der pH-Wert mit Natronlauge auf 9,5—10 eingestellt.

*Benzthiazol-2-on-(β-Formyl-hydrazon)*

100 Gew.-Teile Benzthiazol-2-on-hydrazon werden mit 100 Gew.-Teilen konz. Ameisensäure und 350 Gew.-Teilen Wasser eine Stunde auf 100°C erhitzt. Nach dem Abkühlen wird abgesaugt, mit Wasser gewaschen und getrocknet. Ausbeute: 98 Gew.-Teile; Fp = 228—229°C (Zersetzung).

*Gebrauchslösung R*

25 Gew.-Teile Benzthiazol-2-on-(β-Formyl-hydrazon) werden in 500 Gew.-Teilen Methanol aufgeschlämmt und in eine Lösung von 16 Gew.-Teilen teilverseiften Polyvinylalkohol in 10 000 Gew.-Teilen Wasser eingetragen und der pH-Wert auf 9,5—10 eingestellt.

*Polymergebundenes Benzthiazol-2-on-hydrazon*

16,5 Gew.-Teile Benzthiazol-2-on-hydrazon werden bei 80°C in 1000 Gew.-Teilen Methylglykolacetat gelöst. Dann wird eine Lösung von 156 Gew.-Teilen eines 1:1 Copolymerisats von Maleinsäureanhydrid mit Methylvinyläther in 1000 Gew.-Teilen Methylglykolacetat langsam unter Rühren gegeben. Das ausgefallene Produkt wird abgesaugt, mit Methanol gewaschen und bei 30°C im Vakuum getrocknet. Ausbeute: 318 Gew.-Teile; $Fp_{(Z)}$ = 275°C.

*Gebrauchslösung S*

40 Gew.-Teile des so erhaltenen Produktes werden in 500 Gew.-Teilen Methanol aufgeschlämmt und in eine Lösung von 5 Gew.-Teilen teilverseiftem Polyvinylalkohol in 10 000 Gew.-Teilen Wasser eingetragen und der pH-Wert sodann mit Natronlauge auf 9,5—10 eingestellt.

*Carbomethoxyliertes Benzthiazol-2-on-hydrazon*

21 Gew.-Teile Benzthiazol-2-on-hydrazon werden mit 14,8 Gew.-Teilen $Cl—CH_2—COONa$ in 100 Gew.-Teilen Isopropanol nach Zusatz von 100 Gew.-Teilen 2n Natronlauge 40 Minuten am Rückfluß und Überlagerung mit Stickstoff gekocht.

*Gebrauchslösung T*

Die so erhaltene gelbe Lösung ist direkt zur Herstellung einer Gebrauchslösung geeignet. Zu diesem Zweck wird mit einer Lösung von 10 Gew.-Teilen teilverseiftem Polyvinylalkohol in 10 000 Gew.-Teilen Wasser verdünnt.

Reaktorzustand nach Kesselreisen

| Beispiel | Behandlung mit | 1 | 3 | 5 | 10 |
|---|---|---|---|---|---|
| 1 | P | blank | blank | einige kleine Matt-stellen | Keine Mattstellen blank |
| 2 | Q | blank | einige kleine Mattstellen | Mattstellen unver-ändert | Mattstellen ver-schwunden, blank |
| 3 | R | blank | wenige Mattstellen | Mattstellen fast verschwunden | keine Mattstellen blank |
| 4 | S | blank | wenige Mattstellen | Oberfläche leicht matt | Oberfläche leicht matt, unverandert |
| 5 | T | blank | blank | blank | blank |
| 6* | ohne | wenige kleine Mattstellen | weißerer Anflug fast durchgehend ca. 36 $g/m^2$ | papierartiger Belag ca. 185 $g/m^2$ | starker borkenartiger Belag 1550 $g/m^2$ |

*zum Vergleich

**Patentansprüche**

1. Verfahren zur Herstellung von Vinylchlorid-Homo-, -Co- oder -Propfpolymerisaten, die mindestens 50 Gew.-% polymerisierte Vinylchlorideinheiten enthalten, durch Polymerisation des Monomeren oder Monomerengemisches in wäßriger Dispersion mit radikalbildenden Katalysatoren, gegebenenfalls Suspensionsstabilisatoren, Emulgatoren und weiteren Polymerisationshilfsstoffen, wobei die Polymerisation in einem Reaktor durchgeführt wird, dessen Innenwände und dessen übrige Teile, an denen sich Polymerablagerungen bilden können, ganz oder teilweise mit einem Überzug versehen sind, der Thiazolverbindungen als belagsunterdrückende Verbindungen enthält, dadurch gekennzeichnet, daß diese belagsunterdrückenden Verbindungen solche der allgemeinen Formel

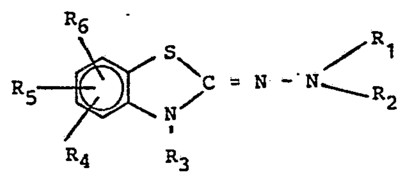

sind, in der

$R_1$ = Wasserstoff, wobei einer der Reste $R_4$ bis $R_6$ gleich Carboxyl oder Sulfonyl ($-SO_3H$) sein muß und keiner der verbleibenden Reste für Wasserstoff steht oder keiner der Reste $R_4$ bis $R_6$ für Wasserstoff steht;

Formyl, $-(CH_2)_X-COOH (X = 1, 2)$ oder

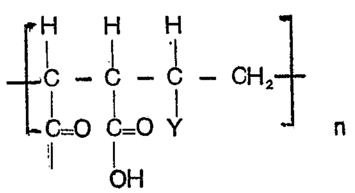

n = 5 – 1000

Y = Phenyl

Y = $-O-Alkyl(C_1-C_{10})$

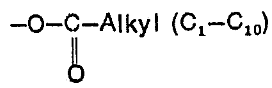

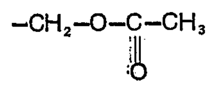

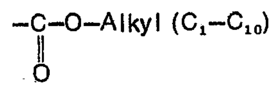

$R_2$ = Wasserstoff;

$R_3$ = Wasserstoff oder einen organischen Kohlenwasserstoffrest mit 1 bis 12 C-Atomen;

$R_4$ = $R_3$ oder O-organ. Kohlenwasserstoffrest mit 1 bis 12 C-Atomen, Hydroxyl, Halogen, Amino, (Di)alkylamino mit 1 bis 12 C-Atomen, Carboxyl, Sulfonyl;

$R_5$, $R_6$ = $R_4$ oder

$R_4$ und $R_5$ einen aromatischen Ring bedeuten.

2. Verfahren nach Anspruch 1, dadurch gekennzeichnet, daß $R_1$ und $R_3$ Wasserstoff darstellen.

3. Verfahren nach Anspruch 1 und 2, dadurch gekennzeichnet, daß zwei der Reste $R_4$ bis $R_6$ Wasserstoff bedeuten.

4. Verfahren nach Anspruch 1 bis 3, dadurch gekennzeichnet, daß die beschichteten Oberflächen vor der Polymerisation mit Wasser gespült werden.

5. Polymerisationsgefäß, dadurch gekennzeichnet, daß seine Innenwände und die übrigen Teile, an denen sich Polymerablagerungen bilden können, ganz oder teilweise mit einem Überzug versehen sind, der Verbindungen der allgemeinen Formel

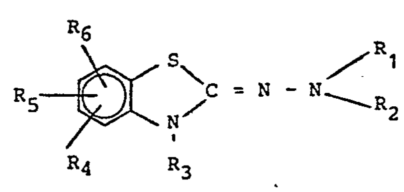

enthält, in der $R_1$ bis $R_6$ die Bedeutung gemäß Anspruch 1 bis 3 haben.

**Revendications**

1. Procédé de préparation d'homopolymères du chlorure de vinyle ou de copolymères ou copolymères greffés du chlorure de vinyle contenant au moins 50% en poids de motifs de chlorure de vinyle incorporés par polymérisation, par polymérisation du monomère ou du mélange de monomères, en dispersion aqueuse, au moyen de catalyseurs radiculaires, éventuellement de stabilisants de suspension, d'émulsionnants et d'autres adjuvants de polymérisation, la polymérisation étant effectuée dans un réacteur dont les parois intérieures et les autres parties susceptibles d'être le siège de dépôts de polymères sont munies, totalement ou partiellement, d'un revêtement contenant des composés thiazoliques comme composés s'opposant à la formation de dépôts, procédé caractérisé en ce que ces composés s'opposant à la formation de dépôts répondant à la formule générale:

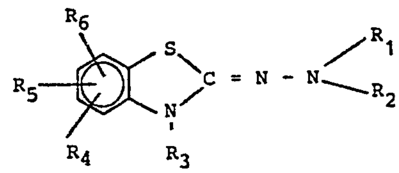

dans laquelle

$R_1$ représente l'hydrogène, auquel cas un des radicaux $R_4$ à $R_6$ est obligatoirement un groupe carboxy ou un groupe sulfo ($-SO_3H$) et aucun des radicaux restants n'est l'hydrogène, ou aucun des radicaux $R_4$ à $R_6$ n'est l'hydrogène; un radical formyle, un radical $-(CH_2)_x-COOH$ (avec x = 1 ou 2) ou un radical:

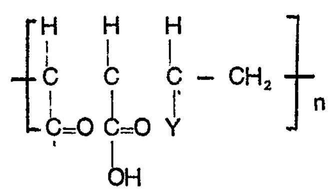

dans lequel

n est un nombre de 5 à 1000,

Y représente un radical phényle, alcoxy en $C_1-C_{10}$, alkylcarbonyloxy à alkyle en $C_1-C_{10}$,

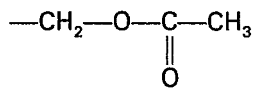

ou un radical alcoxycarbonyle à alkyle en $C_1-C_{10}$,

$R_2$ représente l'hydrogène,

$R_3$ représente l'hydrogène ou un radical hydrocarboné organique contenant de 1 à 12 atomes de carbone,

$R_4$ a la signification donnée pour $R_3$ ou représente un radical hydrocarbyloxy organique contenant de 1 à 12 atomes de carbone, un groupe hydroxy, un halogène, un groupe amino, un groupe (di)alkylamino contenant de 1 à 12 atomes de carbone, ou un groupe carboxy ou sulfo,

$R_5$ et $R_6$ ont chacun la signification donnée pour $R_4$ ou

$R_4$ et $R_5$ forment un noyau aromatique.

2. Procédé selon la revendication 1, caractérisé en ce que $R_1$ et $R_3$ représentent chacun l'hydrogène.

3. Procédé selon l'une des revendications 1 et 2, caractérisé en ce que deux des symboles $R_4$ à $R_6$ représentent chacun l'hydrogène.

4. Procédé selon l'une quelconque des revendications 1 à 3, caractérisé en ce que les surfaces revêtues sont rincées à l'eau avant la polymérisation.

5. Récipient de polymérisation, caractérisé en ce que ses parois intérieures et les autres parties sur lesquelles il risque de se former des dépôts de polymères sont munies, totalement ou partiellement, d'un revêtement contenant des composés répondant à la formule générale:

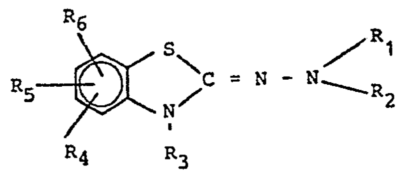

dans laquelle les symboles $R_1$ à $R_6$ ont les significations données dans les revendications 1 à 3.

## Claims

1. A process for the manufacture of vinyl chloride homopolymers, copolymers or graft polymers containing at least 50% by weight of polymerized vinyl chloride units by polymerization of the monomer or the monomer mixture in aqueous dispersion in the presence of radical-forming catalysts, optionally suspension stabilizers, emulsifiers and further polymerization auxiliaries, carrying out the polymerization in a reactor the inner walls of which and other parts where polymer deposits may form are coated entirely or partially with a coating containing as deposit depressing agent thiazine compounds, which comprises that the deposit depressing agent is a compound of the formula

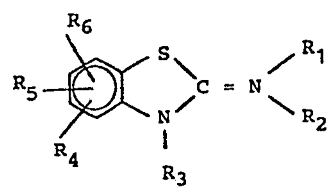

in which

$R_1$ is hydrogen, with the proviso that at least one of the radicals $R_4$ to $R_6$ must be carboxyl or sulfonyl ($-SO_3H$), and none of the remaining radicals is hydrogen, or none of the radicals $R_4$ to $R_6$ is hydrogen,

formyl, $-(CH_2)_X-COOH$ (X = 1, 2) or

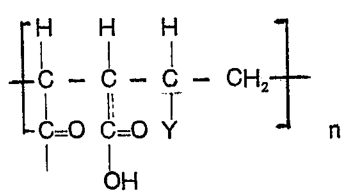

n = 5 – 1000,

Y = phenyl or

$-O-$alkyl ($C_1-C_{10}$),

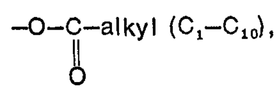

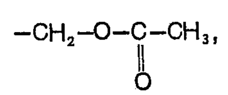

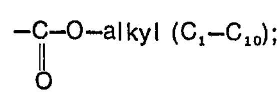

$R_2$ is hydrogen;

$R_3$ is hydrogen or an organic hydrocarbon radical having from 1 to 12 carbon atoms;

$R_4$ is $R_3$; furthermore an O-organic hydrocarbon radical having from 1 to 12 carbon atoms, hydroxyl, halogen, amino, (di)-alkylamino having from 1 to 12 carbon atoms, carboxyl, sulfonyl;

$R_5$, $R_6$ are $R_4$, or

$R_4$ and $R_5$ together are an aromatic ring.

2. The process as claimed in claim 1, wherein $R_1$ and $R_3$ are hydrogen.

3. The process as claimed in claims 1 and 2, wherein two of the radicals $R_4$ to $R_6$ are hydrogen.

4. The process as claimed in claims 1 to 3, which comprises rinsing the coated surfaces with water before the polymerization.

5. Polymerization vessel wherein the inner walls and other parts where polymer deposits may

form are coated partially or entirely with a coating containing compounds of the formula

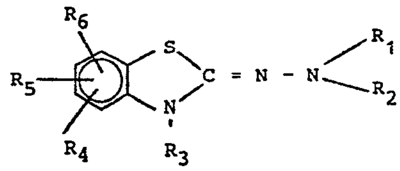

in which $R_1$ to $R_6$ are as defined in claims 1 to 3.